(19) Europäisches Patentamt
European Patent Office
Office européen des brevets

(11) EP 3 244 346 A1

(12) EUROPEAN PATENT APPLICATION

(43) Date of publication:
15.11.2017 Bulletin 2017/46

(51) Int Cl.:
G06K 9/00 (2006.01)    G06K 9/46 (2006.01)

(21) Application number: 17167251.2

(22) Date of filing: 20.04.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 10.05.2016   JP 2016094244

(71) Applicant: Fujitsu Limited
Kawasaki-shi, Kanagawa 211-8588 (JP)

(72) Inventors:
• Yu, Shanshan
Kanagawa, 211-8588 (JP)
• Ishii, Daisuke
Kanagawa, 211-8588 (JP)
• Nakashima, Satoshi
Kanagawa, 211-8588 (JP)

(74) Representative: Hoffmann Eitle
Patent- und Rechtsanwälte PartmbB
Arabellastraße 30
81925 München (DE)

(54) DETERMINING DEVICE AND DETERMINATION METHOD

(57) A method includes acquiring an image including an object's face, detecting multiple candidate regions having characteristics of human eyes from the image, extracting high-frequency components of spatial frequencies in the image from the multiple candidate regions, distinguishing first regions likely to correspond to the eyes over second regions likely to correspond to eyebrows for the multiple candidate regions based on amounts of the high-frequency components of the multiple candidate regions, and outputting results of the distinguishing.

FIG. 1

EP 3 244 346 A1

**Description**

FIELD

The embodiments discussed herein are related to a technique for determining eyes and eyebrows of an object.

BACKGROUND

There is a technique for detecting eye regions of an object from an image. The technique for detecting eye regions is used for various techniques. For example, as one of the various techniques, there is a technique for using a near-infrared light source and a near-infrared camera to detect the gaze of a person or object by a corneal reflection method (refer to, for example, Non-Patent Document 1).

The corneal reflection method is to use a near-infrared light source to acquire an image in a state in which light from a near-infrared light source is reflected on corneas, detect eye regions from the image, and detect the gaze of an object from positional relationships between the positions of the centers of pupils and central positions, identified from the eye regions, of corneal reflexes.

As the technique for detecting eye regions of an object, a method using template matching or information of characteristics of eyes is known, for example. However, in the method using the template matching or the like, regions that are eyebrow regions or the like and are not eye regions are detected. To avoid this, there is a method of identifying candidate regions for eyes by template matching or the like and identifying eye regions among the candidate regions for the eyes from positional relationships with facial parts (nose and mouth) other than the eyes.

In addition, as a method other than the method using facial parts other than eyes, there is a processing device that distinguishes eye regions from eyebrow regions while paying attention to the difference between a histogram of the eye regions and a histogram of the eyebrow regions (for example, Patent Document 1).

CITATION LIST

[PATENT DOCUMENT]

[Patent Document 1] Japanese Laid-open Patent Publication No. 08-300978

[NON-PATENT DOCUMENT]

[Non-Patent Document 1] Takehiko Ohno et al, "An Eye Tracking System Based on Eyeball Model - Toward Realization of Gaze Controlled Input Device -", Research Report of Information Processing Society of Japan 2001-HI-93, 2001, pp 47-54

SUMMARY

TECHNICAL PROBLEM

For example, facial parts such as a nose and a mouth are not able to be detected from an image of an object who is putting on a mask and from an image obtained when a part of the face of the object is located outside a frame. Thus, eye regions are not able to be identified from candidate regions for eyes using positional relationships with the facial parts other than the eyes.

In the method described in Patent Document 1, facial parts other than eyes are not used, and when an object's face in an image is inclined (or when the object inclines his or her head or the like), there is a problem that the accuracy of distinguishing eye regions from eyebrow regions is reduced.

An object of techniques disclosed in embodiments is to stably determine eyebrow regions and eye regions among candidate regions for eyes, regardless of whether or not an object's face is inclined.

SOLUTION TO PROBLEM

According to an aspect of the invention, a method includes acquiring an image including an object's face, detecting multiple candidate regions having characteristics of human eyes from the image, extracting high-frequency components of spatial frequencies in the image from the multiple candidate regions, distinguishing first regions likely to correspond to the eyes over second regions likely to correspond to eyebrows for the multiple candidate regions based on amounts of the high-frequency components of the multiple candidate regions, and outputting results of the distinguishing.

BRIEF DESCRIPTION OF DRAWINGS

FIG. 1 is a functional block diagram of a determining device according to a first embodiment.
FIG. 2 illustrates an example of a template.
FIGs. 3A and 3B are diagrams describing relationships between amounts of high-frequency components and the certainty of eye regions.
FIG. 4 illustrates an example of a data configuration of a candidate region information management table for managing candidate regions.
FIG. 5 is a flowchart of a determination process according to the first embodiment.
FIG. 6 is a functional block diagram of a determining device according to a second embodiment;
FIGs. 7A and 7B are diagrams describing edge directions.
FIG. 8 illustrates an example of a data configuration of an edge direction management table for managing edge directions.
FIG. 9 is a flowchart of a determination process according to the second embodiment.
FIG. 10 is a functional block diagram of a determining device according to a third embodiment.
FIG. 11 illustrates an example of a data configuration of a conversion table.
FIG. 12 is a flowchart of a determination process according to the third embodiment.
FIGs. 13A and 13B are diagrams describing problems with a conventional technique.
FIGs. 14A and 14B illustrate an image of a face and the results of extracting edges when the face is inclined.
FIG. 15 illustrates a hardware configuration of each of the determining devices.

DESCRIPTION OF EMBODIMENTS

Hereinafter, the embodiments of detection techniques disclosed herein are described in detail with reference to the accompanying drawings. The techniques disclosed herein are not limited by the embodiments.

[First Embodiment]

In a first embodiment, candidate regions for eyes are detected from an image of an object's face, and regions likely to correspond to eyebrows and regions likely to correspond to the eyes are determined based on high-frequency components of the candidate regions. After that, information of candidate regions excluding candidate regions determined as the regions (eyebrow regions) likely to correspond to the eyebrows is used for a gaze detection technique disclosed in Non-Patent Document 1.

In addition, the information of the candidate regions for the eyes, excluding the eyebrow regions, is also used for a technique for detecting a blink of the object by monitoring the eye regions, and for the gazedetection technique. The technique for detecting a blink may be applied to the detection of the sleepiness of a driver who is an object, for example. In addition, the information of the candidate regions for the eyes, excluding the eyebrow regions, is also used for a technique for detecting a nod of the object or a change in the orientation of the face by monitoring changes in the positions of the eye regions. This technique may be applied to a tool for communication with physically disabled people, for example.

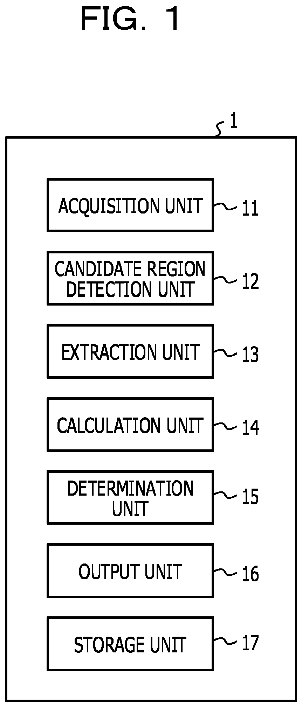

FIG. 1 is a functional block diagram of a determining device according to the first embodiment. The determining device 1 detects candidate regions for eyes from an image of an object's face, determines candidate regions (eyebrow regions) likely to correspond to eyebrows based on amounts of high-frequency components of spatial frequencies in the image, and determines candidate regions highly likely to be eye regions. The high-frequency components indicate changes in reflectance from the side of the object and are detected as, for example, edges, high-luminance isolated pixels, or the like.

For example, in a case where the determining device 1 determines eye regions for gaze detection, the determining device 1 is connected to a camera configured to image an object irradiated with near-infrared light and treats an image acquired from the camera as a target to be processed. In addition, in the case where the determining device 1 determines the eye regions for the lint-of-sight detection, the determining device 1 outputs processing results to another device or algorithm for identifying the positions of pupils of the object and positions of corneal reflexes in response to the near-infrared light. The other device or algorithm treats, as candidate regions to be processed, candidate regions likely to be the eye regions and detected by the determining device 1 and executes a process of identifying the positions of pupils of the object and the positions of the corneal reflexes elicited by the near-infrared light within the candidate regions to be processed.

The determining device 1 includes an acquisition unit 11, a candidate region detection unit 12, an extraction unit 13, a calculation unit 14, a determination unit 15, an output unit 16, and a storage unit 17. The acquisition unit 11 acquires an image including an object's face from the camera. If the camera is a near-infrared camera, the image is a near-infrared image.

The candidate region detection unit 12 detects, from the image, candidate regions that are candidates for eye regions of the object, based on characteristic information of human eyes. Normally, as the candidate regions, two left and right eyes and regions (for example, eyebrow regions) having characteristic information of the eyes are detected.

As methods of detecting the candidate regions, the following methods are known, for example. The first method is to detect dark circular regions that are characteristics of irises and to set regions including the circular regions as the candidate regions.

Specifically, the candidate region detection unit 12 uses luminance information of the image to identify pixels having luminance equal to or lower than a threshold and groups the identified pixels into regions. Then, the candidate region detection unit 12 determines whether or not the shapes of the grouped regions are approximately circular. For the determination of whether or not the shapes are approximately circular, techniques disclosed in "Wilhelm Burger et al, "Digital Image Processing", pp 224-225" and "Ken-ichiro Muramoto et al, "Analysis of Snowflake Shape by a Region and Contour Approach", The transactions of the Institute of Electronics, Information and Communication Engineers of Japan, May, 1993, Vol. J76-D-II, No. 5, pp. 949-958" may be used, for example.

If the candidate region detection unit 12 determines that the shapes of the grouped regions are approximately circular, the candidate region detection unit 12 sets rectangular regions based on the grouped regions. For example, the centers of gravity of the rectangular regions are set to the centers of approximate ellipses, long sides (in X axis direction) of the rectangular regions are set to values that are three times as long as the diameters of the approximate ellipses, and short sides (in Y axis direction) of the rectangular regions are set to be equal to the diameters of the approximate ellipses. In addition, for example, the rectangular regions may not depend on the sizes of the approximate ellipses, and the sizes of the rectangular regions may be set in advance.

The second method is to detect candidate regions for eyes by template matching. The candidate region detection unit 12 divides an image into rectangular regions of a predetermined size and calculates representative luminance values of the rectangular regions. As the representative luminance values, average values of pixels included in the rectangular regions or the like are used.

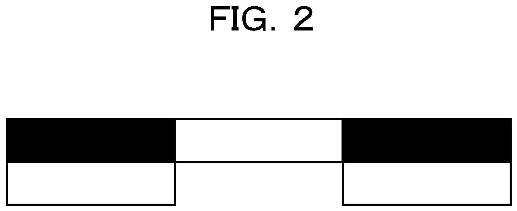

The candidate region detection unit 12 uses a template illustrated in FIG. 2, for example. FIG. 2 illustrates an example of a template.

In a facial image, both eye portions are dark and a nose and a cheek are bright. Thus, the template has an upper left rectangular region whose representative luminance value is smaller than a threshold, an upper central rectangular region whose representative luminance value is equal to or larger than the threshold, an upper right rectangular region whose representative luminance value is smaller than the threshold, a lower left rectangular region whose representative luminance value is equal to or larger than the threshold, and a lower right rectangular region whose representative luminance value is equal to or larger than the threshold. When a region that matches the template is identified, the candidate region detection unit 12 detects an upper left rectangular region and an upper right rectangular region as candidate regions.

The third method is to detect, if an image is a near-infrared image for gaze detection, candidate regions by using the fact that corneal reflexes elicited by near-infrared light occur on eyeballs and using characteristics of the corneal reflexes. The candidate region detection unit 12 detects groups of high-luminance pixels that are the characteristics of the corneal reflexes. For example, if luminance values are in a range of 0 to 256, the candidate region detection unit 12 detects groups of pixels whose luminance values are equal to or larger than 200. Then, rectangular regions are set based on the centers of the groups of the pixels and treated as candidate regions. However, if the numbers of the pixels included in the groups are equal to or larger than a predetermined value, an imaged object may be determined as a non-human object (for example, white cloth or the like) that has not had the corneal reflexes has not occurred and the groups may be excluded.

As a method of detecting candidate regions for eyes, a method other than the aforementioned first to third methods may be used. The candidate region detection unit 12 may execute only any of the first to third methods or may combine multiple methods among the first to third methods and execute the multiple methods.

As described above, the various methods of detecting candidate regions for eyes may be used. For example, in the first method, if a low-luminance circular region is detected in an eyebrow portion, a candidate region is set in the eyebrow portion. In the second method, left and right eyebrow portions match the template, and candidate regions are set in the eyebrow portions. In the third method, if a region in which skin is seen exists in an eyebrow portion, the portion is detected as a group of high-luminance pixels, and a candidate region is set in the eyebrow portion. Thus, whether the candidate region is a region corresponding to an eyebrow or an eye is to be determined.

Next, the extraction unit 13 extracts high-frequency components from the multiple candidate regions. As the high-frequency components, edges or high-luminance isolated pixels (white points) are extracted, for example. If the edges are to be extracted, a Sobel filter or a Canny filter is used. If the high-luminance isolated pixels are to be extracted, Features from Accelerated Segment Test (FAST) that is a method of extracting characteristic points is used.

The calculation unit 14 calculates amounts of the high-frequency components of the multiple candidate regions. If the extraction units 13 extracts the edges as high-luminance components, the calculation unit 14 calculates edge amounts of the candidate regions, for example. In this case, each of the edge amounts is the number of pixels extracted as an edge. In addition, the calculation unit 14 calculates edge densities from the edge amounts. The edge densities are the ratios of the edge amounts to the numbers of all pixels included in the candidate regions to be processed. For example, the edge densities are calculated according to the following Equation (1). The edge densities are in a range of 0 to 1. The edge densities indicate that as the edge densities become larger, the edge amounts become larger.

$$An\ edge\ density = \frac{An\ edge\ amount}{The\ number\ of\ all\ pixels\ within\ a\ candidate\ region}$$

(Equation 1)

On the other hand, if the extraction unit 13 extracts the high-luminance isolated pixels as the high-luminance components, the calculation unit 14 calculates the numbers of the high-luminance isolated pixels of the candidate regions, for example. In addition, the calculation unit 14 calculates the densities of the isolated pixels from the numbers of the isolated pixels. The densities of the isolated pixels are the ratios of the numbers of the isolated pixels to the numbers of all the pixels included in the candidate regions to be processed. For example, the densities of the isolated pixels are calculated according to the following Equation (2). The densities of the isolated pixels are in a range of 0 to 1. The densities of the isolated pixels indicate that as the densities of the isolated pixels become larger, the numbers of the isolated pixels become larger.

$$The\ density\ of\ isolated\ pixels = \frac{The\ number\ of\ isolated\ pixels}{The\ number\ of\ all\ pixels\ within\ a\ candidate\ region}$$

(Equation 2)

Next, the determination unit 15 determines whether the multiple candidate regions are regions corresponding to eyes or regions (eyebrow regions) corresponding to eyebrows. The determination unit 15 compares a threshold set in advance with the densities of the high-frequency components. The threshold is determined by learning in advance and is set to a value appropriate to distinguish eyes from eyebrows. For example, the threshold is 0.2.

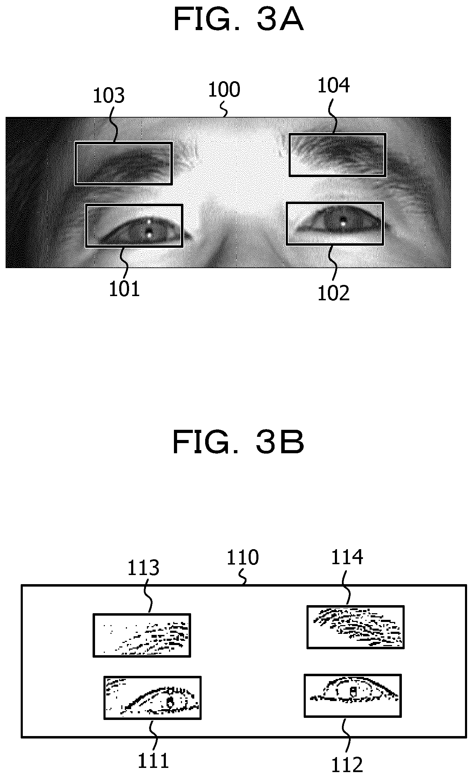

Relationships between the amounts of the high-frequency components and the certainty of the eye regions are described below. FIGs. 3A and 3B are diagrams describing the relationships between the amounts of the high-frequency components and the certainty of the eye regions.

FIG. 3A illustrates a portion (hereinafter referred to as facial image 100) of an image. FIG. 3A illustrates a state in which the candidate region detection unit 12 has detected, from the facial image 100 of an object, candidate regions 101 to 104 as candidate regions for eyes.

FIG. 3B illustrates an edge image 110 obtained by extracting edges as high-frequency components from the candidate regions 101 to 104 of the facial image 100. The candidate region 101 illustrated in FIG. 3A corresponds to a candidate region 111 illustrated in FIG. 3B. The candidate region 102 illustrated in FIG. 3A corresponds to a candidate region 112 illustrated in FIG. 3B. The candidate region 103 illustrated in FIG. 3A corresponds to a candidate region 113 illustrated in FIG. 3B. The candidate region 104 illustrated in FIG. 3A corresponds to a candidate region 114 illustrated in FIG. 3B.

As illustrated in FIGs. 3A and 3B, larger numbers of edges are detected from the candidate regions 113 and 114 corresponding to eyebrows, compared with the numbers of edges detected from the candidate regions 111 and 112 corresponding to eyes. Specifically, edge densities are equal to or larger than a predetermined value (threshold). Thus, the determination unit 15 compares the threshold set in advance with the amounts (or densities) of the high-frequency components, thereby determining whether or not the candidate regions are eyebrow regions. If high-luminance isolated pixels are detected as the high-frequency components, larger numbers of isolated pixels are detected from the eyebrow regions. Thus, if the densities of isolated pixels of candidate regions are equal to or larger than the predetermined value (threshold), it may be determined that the candidate regions correspond to the eyebrows.

Next, the output unit 16 outputs the results of the determination made by the determination unit 15. For example, the output unit 16 outputs information of the candidate regions that are among the multiple candidate regions and exclude the eyebrow regions. The information of the candidate regions (101 and 102) that are among the candidate regions 101 to 104 illustrated in FIGs. 3A and 3B and exclude the eyebrow regions 103 and 104 is output. For example, a destination of the output information is the algorithm or device for detecting the positions of pupils or positions of corneal reflexes for the gaze detection.

The storage unit 17 stores information to be used for various processes to be executed by the determining device 1. For example, the storage unit 17 stores candidate region information on the regions detected as the candidate regions and information of the various thresholds.

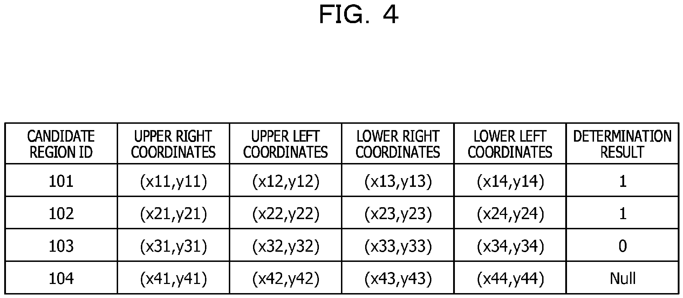

FIG. 4 illustrates an example of a data configuration of a candidate region information management table for managing the candidate regions. Data of the candidate region information management table is stored in the storage unit 17.

In the candidate region information management table, candidate region IDs, positional information (upper right coordinates, upper left coordinates, lower right coordinates, and lower left coordinates) of the candidate regions, and determination results are associated with each other and stored. The candidate region IDs are information identifying the candidate regions. The positional information of the candidate regions is information of the positions of the candidate regions in the image. The determination results are the results of the determination made by the determination unit 15. For example, if the determination unit 15 determines that a candidate region is an eyebrow region, "0" is stored. If the determination unit 15 determines that the candidate region is not the eyebrow region (or that the candidate region is likely to be an eye region), "1" is stored.

FIG. 4 illustrates the candidate region information management table after the determination of the candidate regions 101 to 103 is terminated and before the result of determining the candidate region 104 is obtained. Specifically, determination results "1" are stored for the candidate regions 101 and 102, a determination result "0" is stored for the candidate region 103, and the result of determining the candidate region 104 indicates a "blank (Null)".

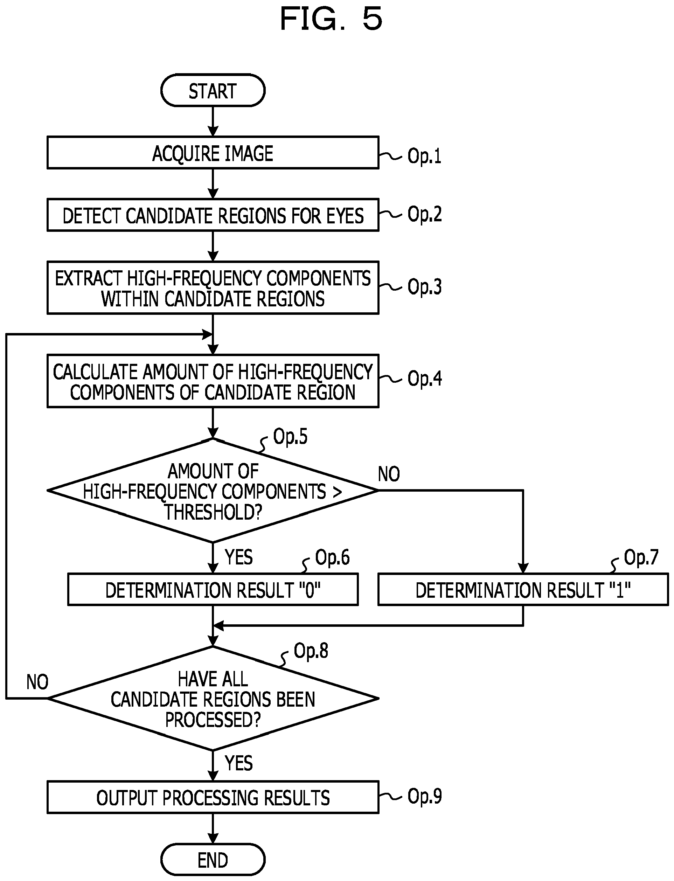

FIG. 5 is a flowchart of a determination process according to the first embodiment. First, the acquisition unit 11 acquires, from the camera, an image to be processed (in Op. 1). Next, the candidate region detection unit 12 detects candidate regions for eyes from the image (in Op. 2). In a process of detecting the candidate regions, one or multiple methods among the first to third methods are used or another known method is used. In addition, the candidate region detection unit 12 causes information of the detected candidate regions to be stored in the candidate region information management table (storage unit 17). At the time when Op. 2 is executed, determination results for all the candidate regions are blank (Null).

It is assumed that at least a part of an object's face or the whole object's face is in the image to be processed. Before Op. 2, the determining device 1 may determine whether or not the face is in the image by a technique such as facial detection. If the face is in the image, the determining device 1 may execute processes of Op. 2 and later.

The extraction unit 13 extracts high-frequency components within the candidate regions (in Op. 3). For example, edges or high-luminance isolated pixels are extracted by any of the aforementioned methods or by the other known method.

The calculation unit 14 treats, as a target candidate region to be processed, any of the candidate regions from which the high-frequency components have been extracted and calculates the amount of high-frequency components of the target candidate region (in Op. 4). For example, the calculation unit 14 calculates an edge amount and an edge density. Alternatively, the calculation unit 14 calculates the number of high-luminance isolated pixels and the density of the isolated pixels.

Next, the determination unit 15 determines whether or not the amount of the high-frequency components is larger than a threshold (in Op. 5). If the amount of the high-frequency components is larger than the threshold (YES in Op. 5), the determination unit 15 determines that the candidate region to be processed is an eyebrow region and the determination unit 15 causes "0" to be stored as a determination result in the candidate region information management table (in Op. 6). On the other hand, if the amount of the high-frequency components is equal to or smaller than the threshold (NO in Op. 5), the determination unit 15 determines that the candidate region to be processed is not the eyebrow region and the determination unit 15 causes "1" to be stored as the determination result in the candidate region information management table (in Op. 7).

Next, the determination unit 15 determines whether or not all the candidate regions have been processed (in Op. 8). Until all the candidate regions are processed, the processes of Op. 4 to Op. 8 are repeated (NO in Op. 8). If all the candidate regions have been processed (YES in Op. 8), the output unit 16 outputs processing results (in Op. 9). For example, the output unit 16 outputs information of candidate regions whose determination results indicate "1" in the candidate region information management table to the other algorithm or device.

As described above, the determining device 1 according to the first embodiment may determine, based on amounts of high-frequency components of candidate regions, a region (for example, eyebrow region) that is inappropriate as an eye region, and improve the accuracy of detecting eye regions. Especially, since a region (for example, eyebrow region) inappropriate as an eye region may be excluded and eye regions may be output in a post-process, the accuracy of the post-process may be improved.

In addition, a traditional problem, in which eyebrow regions that are similar to eyes are detected in the detection of candidate regions for eyes, is solved by paying attention to amounts of high-frequency components and deleting candidate regions that are highly likely to be eyebrow regions. Thus, the determining device 1 may generate detection results excluding eyebrow regions regardless of the accuracy of a technique for detecting candidate regions for eyes and output the detection results.

[Second Embodiment]

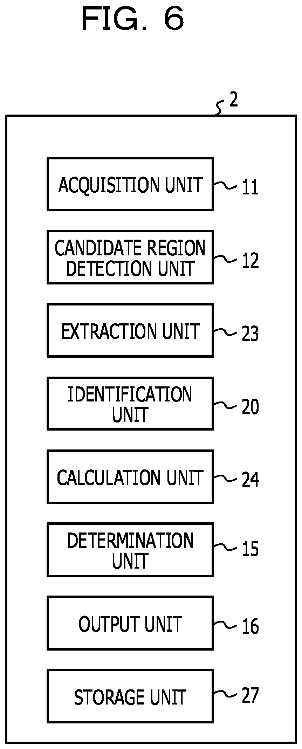

In a second embodiment, edges are detected as high-frequency components, and eyes and eyebrows that are among candidate regions for the eyes are determined based on directions of the edges. FIG. 6 is a functional block diagram of a determining device according to the second embodiment. The determining device 2 determines eyes and eyebrows, like the determining device 1, but uses densities of edges in a specific direction.

The determining device 2 includes the acquisition unit 11, the candidate region detection unit 12, an extraction unit 23, an identification unit 20, a calculation unit 24, the determination unit 15, the output unit 16, and a storage unit 27. The processing sections that have the same functions as those included in the determining device 1 according to the first embodiment are indicated by the same names and reference numerals as those used in the first embodiment, and a description thereof is omitted. The extraction unit 23, the identification unit 20, the calculation unit 24, and the storage unit 27 are described below.

The extraction unit 23 extracts edges as high-frequency components in the second embodiment. In this case, the extraction unit 23 executes a labeling process, thereby grouping edge pixels forming the edges.

Specifically, the extraction unit 23 treats, as edge pixels to be processed, the pixels detected as the edge pixels and determines whether or not peripheral pixels (eight pixels) adjacent to each of the edge pixels to be processed include another edge pixel. If peripheral pixels adjacent to a target edge pixel include another edge pixel, the extraction unit 23 repeats a process of coupling the target edge pixel with the other edge pixel as the pixels forming a single edge and searches an end point of the edge. However, if the pixels are already coupled with each other, the coupling process is not executed. Then, the edge pixels coupled until the search of the end point are grouped as the pixels forming the single edge.

If three or more edge pixels exist among eight peripheral pixels of a certain edge pixel, the certain edge pixel to be processed is an intersection of two or more edges and the extraction unit 23 divides an edge into two or more edges. The target edge pixel (intersection) is included in the divided edges.

The identification unit 20 identifies directions of the edges extracted by the extraction unit 23 and identifies a dominant edge direction from the directions of all the edges within all candidate regions. The dominant edge direction is hereinafter referred to as direction X.

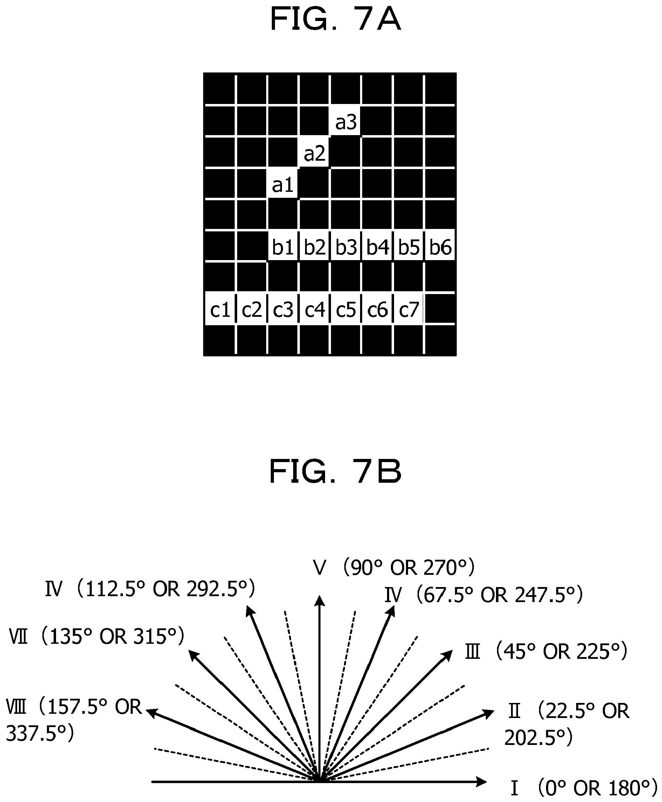

FIGs. 7A and 7B are diagrams describing the directions of the edges. First, the extraction unit 23 executes the labeling process, thereby grouping pixels a1 to a3 illustrated in FIG. 7A as edge pixels forming a single edge a. In addition, the extraction unit 23 groups pixels b1 to b6 as edge pixels forming a single edge b. The extraction unit 23 groups pixels c1 to c7 as edge pixels forming a single edge c.

Next, the identification unit 20 determines the directions of the edges. The identification unit 20 calculates, for each of the edge pixels included in the edges, an angle corresponding to a direction in which another edge pixel among eight pixels surrounding the target edge pixel is located. For example, regarding the edge pixel a1 of the edge a, the other edge pixel a2 among eight pixels surrounding the edge pixel a1 is located in an upper right direction at an angle of 45°. Thus, the identification unit 20 calculates the angle of 45° for the edge pixel a1. Similarly, the angle of 45° is calculated for the edge pixel a2.

In addition, since the pixel a2 is located in a lower left direction for the edge pixel a3, an angle of 225° is calculated for the edge pixel a3. In the second embodiment, for an angle of 180° or larger, 180° is subtracted from the angle of 180° or larger. Thus, the angle of 45° is calculated for the edge pixel a3.

Next, the identification unit 20 calculates an average of angles calculated for edge pixels forming each of the edges. For the edge a, an average value 45° is calculated.

Next, the identification unit 20 determines the directions of the edges based on the average values. FIG. 7B is a diagram illustrating correspondence relationships between average angles of edges and directions of the edges. In the example illustrated in FIG. 7B, eight directions are defined as the directions of the edges. For example, for the edge a whose average angle is 45°, a direction III that is closest to the direction of the edge a is identified as the direction of the edge a. The identification unit 20 determines whether a direction of an edge belongs to any of two adjacent directions between which a boundary indicated by a broken line illustrated in FIG. 7 exists. For example, if an average angle is 10°, the direction of a corresponding edge is a direction I.

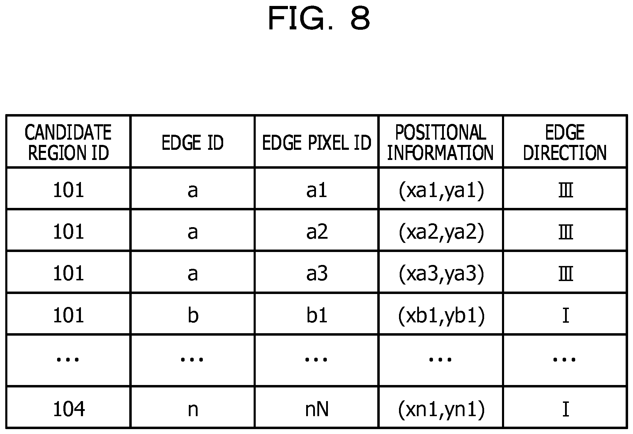

FIG. 8 illustrates an example of a data configuration of an edge direction management table for managing directions of edges. In the edge direction management table, candidate region IDs, edge IDs, edge pixel IDs, positional information, and edge directions are associated with each other and stored. Specifically, the edge direction management table is used to manage the directions of the edges for edge pixels.

The candidate region IDs are information identifying candidate regions. The edge IDs are information identifying the edges. The edge pixels IDs are information identifying the edge pixels. The positional information indicates the positions (coordinates) of the edge pixels. The edge directions are information indicating directions of the edges including the edge pixels.

For example, the edge pixel a1 is described. It is assumed that the edge a that includes the edge pixel a1 is extracted from the candidate region 101. In this case, a candidate region ID "101", an edge ID "a", and an edge pixel ID "a1" are associated with each other and stored. In addition, as positional information of the edge pixel a1, coordinates (xa1, ya1) are stored. Furthermore, when an edge direction "III" of the edge a is identified, the edge direction "III" is associated with the edge pixels a1 to a3 included in the edge a and stored.

In the aforementioned manner, the directions of the edges are identified by the identification unit 20, associated with the edge pixels included in the edges, and managed. When the directions are determined for the edge pixels, the identification unit 20 identifies a dominant edge direction (direction X).

For example, the identification unit 20 references the edge direction management table, calculates the numbers of edge pixels associated with the directions I to III, and treats, as the dominant edge direction (direction X), a direction for which the largest number of edge pixels has been calculated. The identification unit 20 does not identify the dominant edge direction X based on the candidate regions from which the edges has been extracted. Specifically, the single direction X is determined based on the whole edge direction management table.

In addition, in order for the identification unit 20 to identify the direction X, the numbers of the edges may be calculated for the directions, instead of the calculation of the numbers of edge pixels. Then, the identification unit 20 treats, as the dominant edge direction (direction X), a direction for which the largest number of edges has been calculated.

Next, the calculation unit 24 of the determining device 2 according to the second embodiment calculates the number of edge pixels corresponding to the identified direction X and edge densities corresponding to the identified direction X. For example, if the direction X is the direction I, the calculation unit 24 references the edge direction management table and calculates, for each of the candidate regions, the number of edge pixels associated with the edge direction "I". In addition, the calculation unit 24 divides, for each of the candidate regions, the number of edge pixels associated with the edge direction "I" by the number of all pixels of the corresponding candidate region and calculates edge densities of the candidate regions, like Equation (1).

The storage unit 27 stores the candidate region information management table and information to be used for the various processes, like the first embodiment, and stores the edge direction management table (illustrated in FIG. 8).

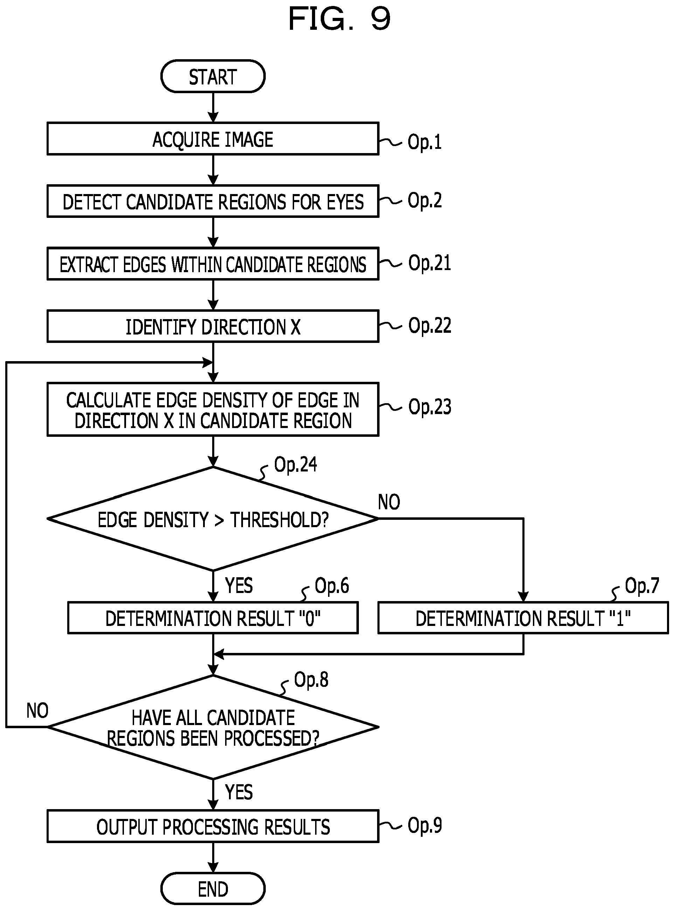

FIG. 9 is a flowchart of a determination process according to the second embodiment. Processes that are the same as those included in the determination process according to the first embodiment are indicated by the same symbols as those used in the first embodiment, and a description thereof is simplified. First, the acquisition unit 11 acquires, from the camera, an image to be processed (in Op. 1). The candidate region detection unit 12 detects candidate regions for eyes from the image (in Op. 2).

The extraction unit 23 extracts edges from the candidate regions (in Op. 21). In the extraction of the edges, the aforementioned labeling process is executed. The identification unit 20 identifies directions of the edges and identifies a dominant edge direction (direction X) from the directions of the edges within all the candidate regions (in Op. 22).

Next, the calculation unit 24 treats any of the candidate regions as a target candidate region to be processed and calculates an edge density of an edge in the direction X in the target candidate region (in Op. 23). The determination unit 15 determines whether or not the edge density is larger than a threshold (in Op. 24). The threshold is, for example, 0.2.

Then, if the edge density is larger than the threshold (YES in Op. 24), the determination unit 15 determines that the candidate region to be processed is an eyebrow region and the determination unit 15 causes "0" to be stored as a determination result in the candidate region information management table (in Op. 26). On the other hand, if the edge density is equal to or smaller than the threshold (NO in Op. 24), the determination unit 15 determines that the candidate region to be processed is not the eyebrow region and the determination unit 15 causes "1" to be stored as the determination result in the candidate region information management table (in Op. 27).

Next, the determination unit 15 determines whether or not all the candidate regions have been processed (in Op. 8). Until all the candidate regions are processed, the processes of Op. 23 and 24 and Op. 6 to 8 are repeated (NO in Op. 8). If all the candidate regions have been processed (YES in Op. 8), the output unit 16 outputs processing results (in Op. 9).

As described above, the determining device 2 according to the second embodiment calculates the densities of edges in the dominant edge direction X based on the directions of the edges. In general, eyelashes are detected as edges in a vertical direction in many cases, and eyebrows are detected as edges in a horizontal direction in many cases. In general, the number of eyelashes is larger than the number of eyebrows. The determining device 2 may improve the accuracy of the determination by determining eyes and eyebrows using edge amounts (densities) of edges likely to be eyebrows, instead of simply using edge amounts.

In addition, the determining device 2 identifies the dominant edge direction X for each image, while not setting the horizontal direction (for example, direction I illustrated in FIG. 7B) as an edge direction used for the calculation of edge densities without exception. For example, even if an object inclines his or her head or the camera is inclined, and the camera images the object, the determining device 2 identifies a direction corresponding to the horizontal direction in a state in which the object is imaged. Thus, even if the object who inclines his or her head is imaged depending on based on the relationship between the position of the object and the position of the camera, the determining device 2 may calculate an edge density of an edge in the direction X corresponding to the original horizontal direction.

[Third Embodiment]

The third embodiment includes the second embodiment, and logic for determination to be made by a determination unit is switched based on the distance between an object and the camera in the third embodiment. Specifically, if the distance between the object and the camera is relatively short, the determination unit according to the third embodiment executes the same determination process as that described in the second embodiment. However, if the distance between the object and the camera is relatively long, the determination unit according to the third embodiment executes another determination process described below.

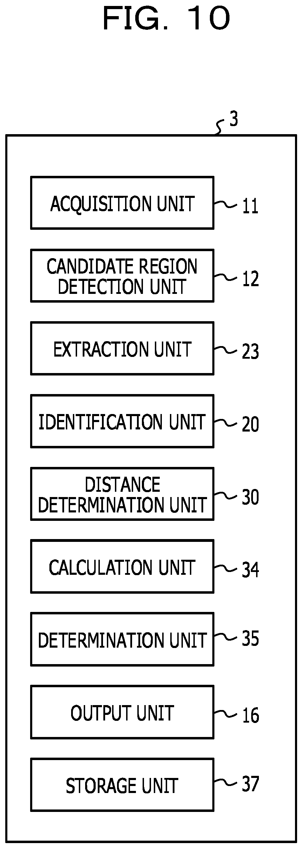

FIG. 10 is a functional block diagram of a determining device according to the third embodiment. The determining device 3 includes the acquisition unit 11, the candidate region detection unit 12, the extraction unit 23, the identification unit 20, a distance determination unit 30, a calculation unit 34, the determination unit 35, the output unit 16, and a storage unit 37. The processing sections that have the same functions as those included in the determining devices 1 and 2 according to the first and second embodiments are indicated by the same names and reference numbers as those described in the first and second embodiment, and a description thereof is omitted. Thus, the distance determination unit 30, the calculation unit 34, the determination unit 35, and the storage unit 37 are described below.

The distance determination unit 30 acquires the distance between the object included in an image and the camera and determines whether or not the distance between the object and the camera is smaller than a threshold Th1. Then, the distance determination unit 30 outputs the result of the determination to the calculation unit 34.

The threshold Th1 is, for example, 80 (cm). For example, the threshold Th1 is set to an appropriate value based on an experiment conducted in advance. For example, images of the object imaged when the object is separated by different distances from the camera are collected, eyebrows are not imaged as edges, and the distance between the object and the camera when the entire eyebrows are imaged as a single low-luminance region is set as the threshold.

In addition, a conventional method is applied to a method of determining the distance between the object and the camera. For example, the distance determination unit 30 acquires the width (pixels) of the face of the object from the image, references a conversion table, and determines the distance (cm). In order for the distance determination unit 30 to acquire the width of the face, the width of a facial region detected in a process of detecting the facial region may be measured, or a high-luminance region (whose luminance is, for example, equal to or larger than 180) including candidate regions for eyes may be estimated as the facial region and the width of the high-luminance region may be measured.

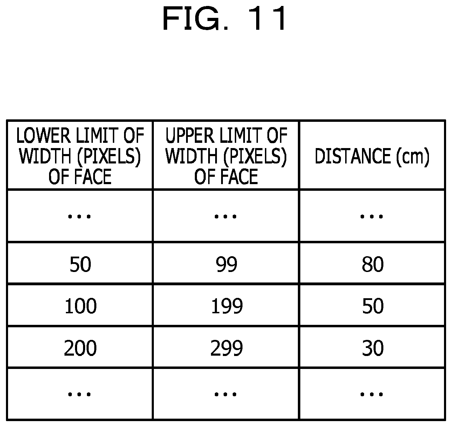

FIG. 11 illustrates an example of a data configuration of the conversion table. In the conversion table, ranges of the width of the face and distances are associated with each other and stored. The conversion table is generated by collecting images obtained by imaging the object when the object is separated by different distances from the camera and executing a learning process. In an example illustrated in FIG. 11, if the width of the face is in a range of 50 pixels to 99 pixels, it is determined that the distance between the object and the camera is 80 cm, for example.

Next, if the distance is smaller than the threshold Th1, the calculation unit 34 calculates, for each candidate region, an edge density in the direction X identified by the identification unit 20. On the other hand, if the distance is equal to or larger than the threshold Th1, the calculation unit 34 calculates, for each candidate region, an edge density in a direction Y perpendicular to the direction X. For example, if the direction X is the direction I illustrated in FIG. 7B, the direction Y is a direction V. Thus, the calculation unit 34 calculates an edge density of an edge in the direction V.

If the distance is smaller than the threshold Th1, the determination unit 35 compares the threshold (hereinafter referred to as threshold Th2) described in the second embodiment with the edge density in the direction X in the same manner as the second embodiment. If the edge density is larger than the threshold Th2, the determination unit 35 determines that the corresponding candidate region is an eyebrow region. On the other hand, if the distance is equal to or longer than the threshold Th1, the determination unit 35 compares a threshold Th3 with the edge density in the direction Y. If the edge density is smaller than the threshold Th3, the determination unit 35 determines that the corresponding candidate region is an eyebrow region. The threshold Th2 is 0.2, like the second embodiment, for example. The threshold Th3 is 0.1, for example. The threshold Th3 is a value that is determined by learning executed in advance and is appropriate to distinguish eyes from eyebrows.

For example, if the object is relatively far away from the camera, eyebrows of the object do not appear as edges in an image. In other words, the entire eyebrows are likely to appear as a single low-luminance region. Thus, in candidate regions corresponding to the eyebrows, contours of the eyebrows remain as edges. In candidate regions corresponding to eyes, contours of the eyes and boundaries between white parts of the eyes and black parts of the eyes remain as edges. In this case, the edges of the contours of the eyebrows and the edges of the contours of the eyes are estimated as edges in the horizontal direction and the edges of the boundaries between the white parts of the eyes and the black parts of the eyes are estimated as edges in the vertical direction in a state in which the object faces the camera.

Thus, the determining device 3 according to the third embodiment determines eyes and eyebrows using edge densities of edges in the direction Y (for example, direction V) perpendicular to the dominant direction X (for example, direction I). Specifically, it is estimated that edge densities in the vertical direction Y in candidate regions corresponding to the eyes are large and that edge densities in the vertical direction Y in candidate regions corresponding to the eyebrows are small. Thus, the determination unit 35 determines that candidate regions in which edge densities are smaller than the threshold Th3 correspond to the eyebrows.

The storage unit 37 stores the candidate region information management table, the edge direction management table, and information of the thresholds to be used for the various processes, like the first and second embodiments, and stores the conversion table (illustrated in FIG. 11).

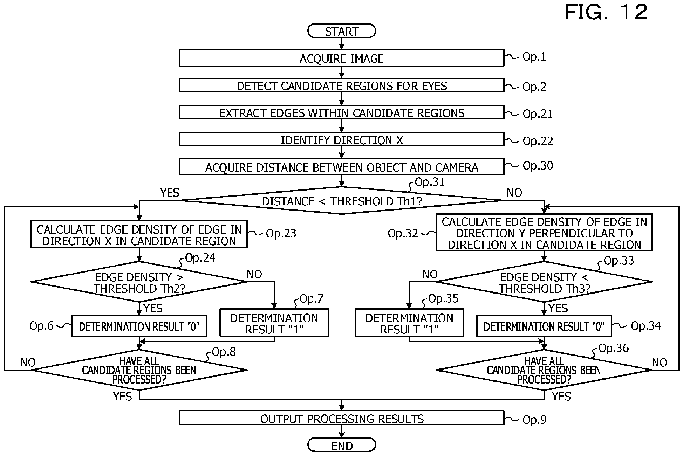

FIG. 12 is a flowchart of a determination process according to the third embodiment. Processes that are the same as those included in the determination processes according to the first and second embodiments are indicated by the same symbols as those used in the first and second embodiments, and a description thereof is simplified. First, the acquisition unit 11 acquires, from the camera, an image to be processed (in Op. 1). The candidate region detection unit 12 detects candidate regions for eyes from the image (in Op. 2).

The extraction unit 23 extracts edges from the candidate regions (in Op. 21). The identification unit 20 identifies directions of the edges and identifies a dominant edge direction (direction X) from the directions of the edges within all the candidate regions (in Op. 22).

Next, the distance determination unit 30 uses the conversion table to acquire the distance between an object and the camera (in Op. 30), for example. Then, the distance determination unit 30 determines whether or not the distance is shorter than the threshold Th1 (in Op. 31).

If the distance is shorter than the threshold Th1 (YES in Op. 31), the calculation unit 34 treats any of the candidate regions as a target candidate region to be processed and calculates an edge density of an edge in the direction X in the target candidate region (in Op. 23). The determination unit 35 determines whether or not the edge density is larger than the threshold Th2 (in Op. 24).

If the edge density is larger than the threshold Th2 (YES in Op. 24), the determination unit 35 determines that the candidate region to be processed is an eyebrow region and the determination unit 35 causes "0" to be stored as a determination result in the candidate region information management table (in Op. 6). On the other hand, if the edge density is equal to or smaller than the threshold Th2 (NO in Op. 24), the determination unit 35 determines that the candidate region to be processed is not the eyebrow region and the determination unit 35 causes "1" to be stored as the determination result in the candidate region information management table (in Op. 7).

Next, the determination unit 35 determines whether or not all the candidate regions have been processed (in Op. 8). Until all the candidate regions are processed, the processes of Op. 23, Op. 24, and Op. 6 to Op. 8 are repeated (NO in Op. 8).

On the other hand, if the distance is equal to or longer than the threshold Th1 (NO in Op. 31), the calculation unit 34 treats any of the candidate regions as a target candidate region to be processed and calculates an edge density of an edge in the direction Y perpendicular to the direction X in the target candidate region (in Op. 32). The determination unit 35 determines whether or not the edge density is smaller than the threshold Th3 (in Op. 33).

If the edge density is smaller than the threshold Th3 (YES in Op. 33), the determination unit 35 determines that the candidate region to be processed is an eyebrow region and the determination unit 35 causes "0" to be stored as a determination result in the candidate region information management table (in Op. 34). On the other hand, if the edge density is equal to or larger than the threshold Th3 (NO in Op. 33), the determination unit 35 determines that the candidate region to be processed is not the eyebrow region and the determination unit 35 causes "1" to be stored as the determination result in the candidate region information management table (in Op. 35).

Next, the determination unit 35 determines whether or not all the candidate regions have been processed (in Op. 36). Until all the candidate regions are processed, the processes of Op. 32 to Op. 36 are repeated (NO in Op. 36).

If all the candidate regions have been processed (YES in Op. 8) or if all the candidate regions have been processed (YES in Op. 36), the output unit 16 outputs processing results (in Op. 9).

As described above, the determining device 3 according to the third embodiment improves the accuracy of determining eyes and eyebrows by switching the determination methods of the two types based on the distance between the object and the camera.

[Effects Compared with Conventional Technique]

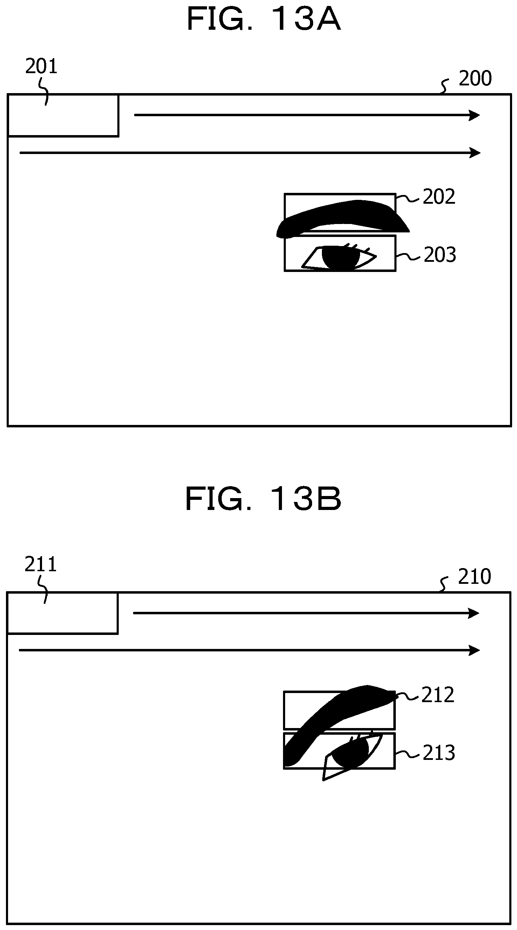

Differences between the determining devices according to the first to third embodiments and a conventional technique according to Patent Document 1 are described below. FIGs. 13A and 13B are diagrams describing problems with the conventional technique.

As illustrated in FIG. 13A, in the conventional technique disclosed in Patent Document 1, rectangular regions 201 of a predetermined size are sequentially set in an image 200 including a face. Then, a luminance histogram is generated for pixels within each of the rectangular regions 201. The histograms indicate, for horizontal positions within the image, pixel number distributions of pixels (low-luminance pixels) whose luminance is lower than a predetermined value.

For example, when the face is not inclined as indicated by the image 200, a histogram of a rectangular region 202 set around an eyebrow indicates that the number of low-luminance pixels of an entire horizontal position in the rectangular region 202 is large. A histogram of a rectangular region 203 set around an eye indicates that the number of low-luminance pixels located around the center in the horizontal direction (or around a black part of the eye) in the rectangular region 203 is large. The conventional technique determines the eye and the eyebrow using the difference between a wide peak in the histogram of the rectangular region 202 and a narrow peak in the histogram of the rectangular region 203.

As illustrated in FIG. 13B, however, if the face of the object is inclined, it is hard to set rectangular regions appropriately including the eyebrow and the eye. This is due to the fact that rectangular regions 211 are sequentially set in an image in the horizontal direction. For example, it is considered that a direction in which the rectangular regions 211 are set is an inclined direction other than the horizontal direction or that the rectangular regions 211 are set at various angles. Setting the rectangular regions 211 in these cases increases a process load and is not practical.

Thus, histograms of rectangular regions 212 and 213 in a state illustrated in FIG. 13B do not have characteristics enabling the eye and the eyebrow to be distinguished from each other, unlike the histograms of the rectangular regions 202 and 203 illustrated in FIG. 13A. Specifically, in the conventional technique, when the face is inclined, it is difficult to determine the eye and the eyebrow.

On the other hand, the determination methods according to the first to third embodiments are executed to extract candidate regions having characteristic information of eyes and determine candidate regions corresponding to the eyes and candidate regions corresponding to eyebrows based on amounts (densities) of high-frequency components of the candidate regions.

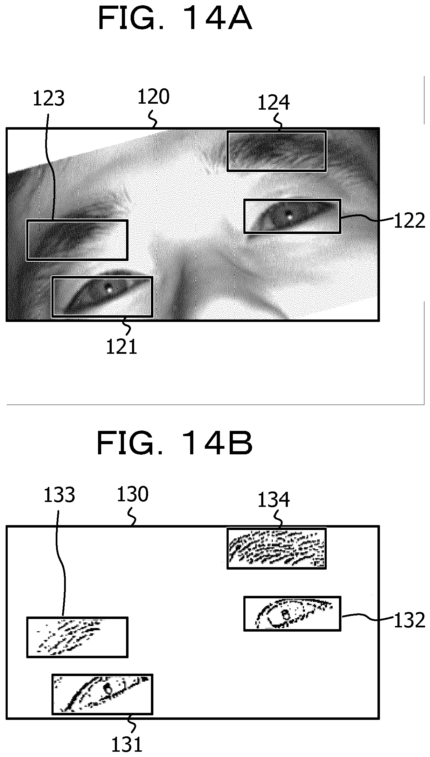

FIGs. 14A and 14B illustrate an image of a face and the results of extracting edges when the face is inclined. FIG. 14A illustrates a portion (facial image 120) of an image acquired in a state in which the face is inclined. FIG. 14A illustrates candidate regions 121 to 124 that are the results of executing a process of extracting, from the facial image 120, candidate regions having characteristic information of eyes. A direction (direction in which long sides of the rectangles are set) in which the candidate regions are set is the horizontal direction of the image, like FIG. 3A. In order to simplify the comparison with FIGs. 3A and 3B, FIG. 14A illustrates, as the facial image 120, an image obtained by inclining the facial image 100 illustrated in FIG. 3A. Thus, in the original facial image obtained when the face is inclined and imaged, images corresponding to parts of the face exist in upper left and lower right white regions of the facial image 120.

FIG. 14B illustrates an edge image 130 that is the results of extracting edges as high-frequency components from the candidate regions 121 to 124 of the facial image 120. Candidate regions 131 to 134 set in the edge image 130 correspond to the candidate regions 121 to 124 of the facial image 120, respectively.

As indicated in the candidate regions 131 to 134 illustrated in FIG. 14B, densities of high-frequency components (edges) in the candidate regions that are among the candidate regions 121 to 124 and correspond to eyebrows are high, while densities of high-frequency components (edges) in the candidate regions that are among the candidate regions 121 to 124 and correspond to eyes are low. Thus, in the determination methods according to the first to third embodiments, eyes and eyebrows may be determined without dependence on the inclination of a face.

[Application Example of Determining Devices]

Each of the determining devices 1 to 3 may be applied as a portion of a gaze detection system. For example, the gaze detection system receives input from the determining devices 1 to 3 and detects pupils and corneal reflexes from eye regions. Then, the gaze detection system detects gaze information (position and direction of the gaze an object) based on the positions of the pupils and positions of the corneal reflexes.

The gaze information is used for safe driving support for a driver and used for marketing at shops, for example. By analyzing the gaze information, whether or not the driver pays attention to various directions and a product to which a customer pays attention are estimated.

[Example of Hardware Configuration]

An example of hardware configurations of the determining devices 1 to 3 is described. An example in which each of the determining devices 1 to 3 is applied as a portion of the gaze system is described below, but the determining devices 1 to 3 are not limited to this.

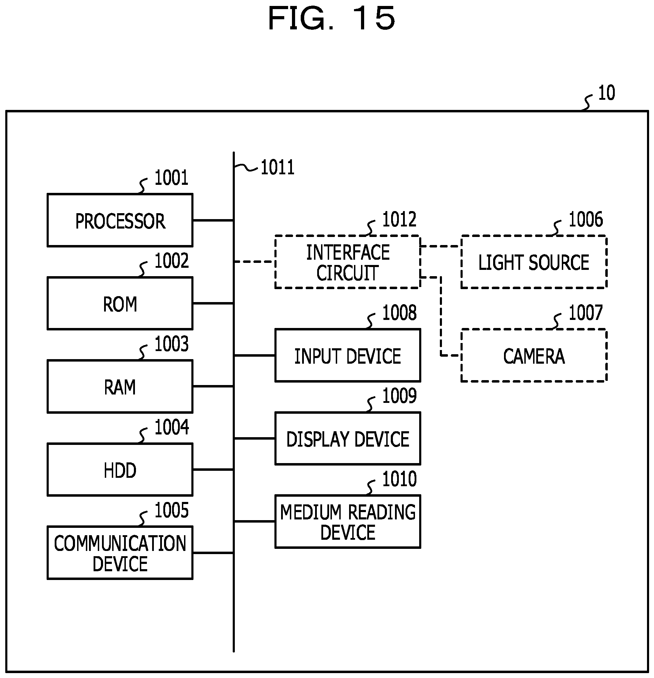

FIG. 15 illustrates a hardware configuration of each of the determining devices. FIG. 15 illustrates an example of a hardware configuration of an entire gaze detection system 10. Specifically, if each of the determining devices 1 to 3 functions independently, the gaze detection system 10 includes hardware components indicated by solid lines. On the other hand, if each of the determining devices 1 to 3 functions as a portion of the gaze detection system 10, the gaze detection system 10 includes the hardware components indicated by the solid lines and hardware components indicated by broken lines.

Each of the determining devices 1 to 3 that is included in the gaze detection system 10 includes, as hardware components, a processor 1001, a read only memory (ROM) 1002, a random access memory (RAM) 1003, a hard disk drive (HDD) 1004, a communication device 1005, an input device 1008, a display device 1009, and a medium reading device 1010. In addition, the gaze detection system 10 includes an interface circuit 1012, a light source 1006, and a camera 1007.

The processor 1001, the ROM 1002, the RAM 1003, the HDD 1004, the communication device 1005, the input device 1008, the display device 1009, the medium reading device 1010, and the interface circuit 1012 are connected to each other via a bus 1011 and able to transmit and receive data between the processor 1001, the ROM 1002, the RAM 1003, the HDD 1004, the communication device 1005, the input device 1008, the display device 1009, the medium reading device 1010, and the interface circuit 1012 under control by the processor 1001.

A program for the determination processes according to the first to third embodiments and a program for the gaze detection processes are stored in a recording medium able to be read by the determining devices 1 to 3 or the gaze detection system 10. Examples of the recording medium are a magnetic recording device, an optical disc, a magneto-optical recording medium, and a semiconductor memory.

Examples of the magnetic recording device are an HDD, a flexible disk (FD), and a magnetic tape (MT). Examples of the optical disc are a digital versatile disc (DVD), a DVD-RAM, a compact disc-read only memory (CD-ROM), and a compact disc-recordable/rewritable (CD-R/RW). An example of the magneto-optical recording medium is a magneto-optical disk (MO). Examples of the semiconductor memory are a ROM, a RAM, a static random access memory (static RAM), and a solid state drive (SSD).

If a program in which the processes according to the embodiments are described is distributed, it is considered that a portable recording medium that is a DVD, a CD-ROM, or the like and in which the program has been recorded is marketed, for example. The medium reading device 1010 reads the program from the recording medium in which the program has been recorded. The processor 1001 causes the read program to be stored in the HDD 1004, the ROM 1002, or the RAM 1003.

The processor 1001 controls operations of the entire determining devices 1 to 3. The processor 1001 includes an electronic circuit such as a central processing unit (CPU), for example.

The processor 1001 reads the program in which the processes according to the embodiments have been described from the recording medium (for example, HDD 1004) storing the program and executes the program, thereby functioning as the candidate region detection unit 12 of each of the determining devices 1 to 3, the extraction unit 13 (23) of each of the determining devices 1 to 3, the calculation unit 14 (24, 34) of each of the determining devices 1 to 3, the determination unit 15 (35) of each of the determining devices 1 to 3, the identification unit 20 of each of the determining devices 2 and 3, and the distance determination unit 30 of the determining device 3. The processor 1001 may load the program read from the recording medium into the RAM 1003 and execute the program loaded in the RAM 1003.

The communication device 1005 functions as the acquisition unit 11 under control by the processor 1001. The HDD 1004 stores information of various types and functions as the storage unit 17 (27, 37) under control by the processor 1004. The information of the various types may be stored in the ROM 1002 or RAM 1003 able to be accessed by the processor 1001. In addition, the information of the various types that is temporarily generated and held during the processes is stored in, for example, the RAM 1003.

The input device 1008 receives input of various types. The input device 1008 is a keyboard or a mouse, for example. The display device 1009 displays information of various types. The display device 1009 is a display, for example.

In the aforementioned manner, the various functional sections illustrated in FIGs. 1, 6, and 10 are achieved by the hardware including the processor 1001 and any of the memories (HDD 1004, ROM 1002, and RAM 1003). The determination processes illustrated in FIGs. 5, 9, and 12 are executed by causing the processor 1001 to read the program stored in any of the memories and execute the program.

The processes according to the embodiments are executed in the cloud in a certain case. In this case, the light source 1006 and the camera 1007 are arranged in a space in which an object exists. The determining devices 1 to 3 (one or more servers) that receive an image from the camera 1007 execute the determination processes illustrated in FIGs. 5, 9, and 12.

REFERENCE SINGS LIST

| | |
|---|---|
| 1, 2, 3 | Determining device |
| 11 | Acquisition unit |
| 12 | Candidate region detection unit |
| 13, 23 | Extraction unit |
| 14, 24, 34 | Calculation unit |
| 15, 35 | Determination unit |
| 16 | Output unit |
| 17, 27, 37 | Storage unit |
| 20 | Identification unit |
| 30 | Distance determination unit |
| 10 | Gaze detection system |
| 1001 | Processor |
| 1002 | ROM |
| 1003 | RAM |
| 1004 | HDD |
| 1005 | Communication device |
| 1006 | Light source |
| 1007 | Camera |
| 1008 | Input device |
| 1009 | Display device |
| 1010 | Medium reading device |
| 1011 | Bus |
| 1012 | Interface circuit |

**Claims**

1. A method executed by a computer, the method comprising:

   acquiring an image including an object's face;
   detecting multiple candidate regions having characteristics of human eyes from the image;
   extracting high-frequency components of spatial frequencies in the image from the multiple candidate regions;
   distinguishing first regions likely to correspond to the eyes over second regions likely to correspond to eyebrows for the multiple candidate regions based on amounts of the high-frequency components of the multiple candidate regions; and
   outputting results of the determination.

2. The method according to claim 1, wherein the high-frequency components correspond to at least one of edges and high-luminance isolated pixels.

3. The method according to claim 1, further comprising:

   extracting multiple edges as the high-frequency components from the multiple candidate regions; and
   determining a dominant first direction among directions of the multiple edges.

4. The method according to claim 3, wherein the distinguishing distinguishes the first regions over the second regions based on densities of edges related to the first direction in the multiple candidate regions.

5. The method according to claim 4, further comprising:

   calculating a distance between the object and a camera that has captured the image.

**6.** The method according to claim 5, wherein the distinguishing distinguishes the first regions over the second regions based on the edge densities when the distance is equal to or shorter than a threshold.

**7.** The method according to claim 6, wherein the distinguishing distinguishes the first regions over the second regions based on other edge densities related to a second direction perpendicular to the first direction when the distance is longer than the threshold.

**8.** The method according to any one of claims 1 to 7, further comprising:

detecting gaze of the object using at least one of the first regions from among the candidate regions.

**9.** A program which, when executed on the computer, causes the computer to execute the method according to any one of claims 1 to 8.

**10.** A device comprising:

an acquisition unit configured to acquire an image including an object's face;
a candidate region detection unit configured to detect multiple candidate regions having characteristics of human eyes;
an extraction unit configured to extract high-frequency components of spatial frequencies in the image from the multiple candidate regions;
a determination unit configured to distinguish first regions likely to correspond to the eyes over second regions likely to correspond to eyebrows for the multiple candidate regions based on amounts of the high-frequency components of the multiple candidate regions; and
an output unit configured to output results by the determination unit.

# FIG. 1

1

| ACQUISITION UNIT | ~ 11 |

| CANDIDATE REGION DETECTION UNIT | ~ 12 |

| EXTRACTION UNIT | ~ 13 |

| CALCULATION UNIT | ~ 14 |

| DETERMINATION UNIT | ~ 15 |

| OUTPUT UNIT | ~ 16 |

| STORAGE UNIT | ~ 17 |

# FIG. 2

# FIG. 3A

# FIG. 3B

# FIG. 4

| CANDIDATE REGION ID | UPPER RIGHT COORDINATES | UPPER LEFT COORDINATES | LOWER RIGHT COORDINATES | LOWER LEFT COORDINATES | DETERMINATION RESULT |
|---|---|---|---|---|---|
| 101 | (x11,y11) | (x12,y12) | (x13,y13) | (x14,y14) | 1 |
| 102 | (x21,y21) | (x22,y22) | (x23,y23) | (x24,y24) | 1 |
| 103 | (x31,y31) | (x32,y32) | (x33,y33) | (x34,y34) | 0 |
| 104 | (x41,y41) | (x42,y42) | (x43,y43) | (x44,y44) | Null |

# FIG. 5

START

ACQUIRE IMAGE — Op.1

DETECT CANDIDATE REGIONS FOR EYES — Op.2

EXTRACT HIGH-FREQUENCY COMPONENTS WITHIN CANDIDATE REGIONS — Op.3

CALCULATE AMOUNT OF HIGH-FREQUENCY COMPONENTS OF CANDIDATE REGION — Op.4

Op.5
AMOUNT OF HIGH-FREQUENCY COMPONENTS > THRESHOLD?

NO

YES

Op.6
DETERMINATION RESULT "0"

Op.7
DETERMINATION RESULT "1"

Op.8
HAVE ALL CANDIDATE REGIONS BEEN PROCESSED?

NO

YES

OUTPUT PROCESSING RESULTS — Op.9

END

# FIG. 6

# FIG. 7A

# FIG. 7B

# FIG. 8

| CANDIDATE REGION ID | EDGE ID | EDGE PIXEL ID | POSITIONAL INFORMATION | EDGE DIRECTION |
|---|---|---|---|---|
| 101 | a | a1 | (xa1,ya1) | III |
| 101 | a | a2 | (xa2,ya2) | III |
| 101 | a | a3 | (xa3,ya3) | III |
| 101 | b | b1 | (xb1,yb1) | I |
| … | … | … | … | … |
| 104 | n | nN | (xn1,yn1) | I |

# FIG. 9

START

ACQUIRE IMAGE ── Op.1

DETECT CANDIDATE REGIONS FOR EYES ── Op.2

EXTRACT EDGES WITHIN CANDIDATE REGIONS ── Op.21

IDENTIFY DIRECTION X ── Op.22

CALCULATE EDGE DENSITY OF EDGE IN DIRECTION X IN CANDIDATE REGION ── Op.23

Op.24
EDGE DENSITY > THRESHOLD? — NO

YES — Op.6
DETERMINATION RESULT "0"

Op.7
DETERMINATION RESULT "1"

Op.8
HAVE ALL CANDIDATE REGIONS BEEN PROCESSED? — NO

YES

OUTPUT PROCESSING RESULTS ── Op.9

END

# FIG. 10

3

| ACQUISITION UNIT | ~ 11 |
|---|---|
| CANDIDATE REGION DETECTION UNIT | ~ 12 |
| EXTRACTION UNIT | ~ 23 |
| IDENTIFICATION UNIT | ~ 20 |
| DISTANCE DETERMINATION UNIT | ~ 30 |
| CALCULATION UNIT | ~ 34 |
| DETERMINATION UNIT | ~ 35 |
| OUTPUT UNIT | ~ 16 |
| STORAGE UNIT | ~ 37 |

# FIG. 11

| LOWER LIMIT OF WIDTH (PIXELS) OF FACE | UPPER LIMIT OF WIDTH (PIXELS) OF FACE | DISTANCE (cm) |
|---|---|---|
| ... | ... | ... |
| 50 | 99 | 80 |
| 100 | 199 | 50 |
| 200 | 299 | 30 |
| ... | ... | ... |

FIG. 12

START

ACQUIRE IMAGE — Op.1

DETECT CANDIDATE REGIONS FOR EYES — Op.2

EXTRACT EDGES WITHIN CANDIDATE REGIONS — Op.21

IDENTIFY DIRECTION X — Op.22

ACQUIRE DISTANCE BETWEEN OBJECT AND CAMERA — Op.30

Op.31
YES — DISTANCE < THRESHOLD Th1? — NO

CALCULATE EDGE DENSITY OF EDGE IN DIRECTION X IN CANDIDATE REGION — Op.23

Op.32 — CALCULATE EDGE DENSITY OF EDGE IN DIRECTION Y PERPENDICULAR TO DIRECTION X IN CANDIDATE REGION

Op.24
EDGE DENSITY > THRESHOLD Th2? — NO

NO — Op.33
EDGE DENSITY < THRESHOLD Th3?

YES

Op.6 — DETERMINATION RESULT "0"

Op.7
DETERMINATION RESULT "1"

Op.35
DETERMINATION RESULT "1"

YES
DETERMINATION RESULT "0" — Op.34

Op.8
NO — HAVE ALL CANDIDATE REGIONS BEEN PROCESSED?

Op.36
HAVE ALL CANDIDATE REGIONS BEEN PROCESSED? — NO

YES

YES

OUTPUT PROCESSING RESULTS — Op.9

END

# FIG. 13A

# FIG. 13B

# FIG. 14A

# FIG. 14B

# FIG. 15

Europäisches
Patentamt

European
Patent Office

Office européen
des brevets

## EUROPEAN SEARCH REPORT

Application Number

EP 17 16 7251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 107 502 A1 (AISIN SEIKI [JP]) 7 October 2009 (2009-10-07) | 1-4,8-10 | INV. G06K9/00 |
| A | * abstract * * paragraph [0066] - paragraph [0069] * * figure 5 * | 5-7 | G06K9/46 |
| X | Stylianos Asteriadis ET AL: "A Review of Facial Feature Detection Algorithms : Techniques and Technologies :" In: "Advances in Face Image Analysis : Techniques and Technologies", 1 January 2011 (2011-01-01), IGI Global, XP055405064, ISBN: 978-1-61520-992-7 pages 42-61, DOI: 10.4018/978-1-61520-991-0.ch003, * abstract * * section I * | 1,9,10 | |

TECHNICAL FIELDS
SEARCHED     (IPC)

G06K

The present search report has been drawn up for all claims

| Place of search | Date of completion of the search | Examiner |
|---|---|---|
| The Hague | 8 September 2017 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 7251

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2017

| Patent document cited in search report | Publication date | Patent family member(s) | Publication date |
|---|---|---|---|
| EP 2107502 A1 | 07-10-2009 | EP 2107502 A1<br>JP 5262243 B2<br>JP 2009240519 A<br>US 2009244274 A1 | 07-10-2009<br>14-08-2013<br>22-10-2009<br>01-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8300978 A

**Non-patent literature cited in the description**

- **TAKEHIKO OHNO et al.** An Eye Tracking System Based on Eyeball Model - Toward Realization of Gaze Controlled Input Device. Research Report of Information Processing Society of Japan, 2001, 47-54
- **WILHELM BURGER et al.** *Digital Image Processing,* 224-225

- **KEN-ICHIRO MURAMOTO et al.** Analysis of Snowflake Shape by a Region and Contour Approach. The transactions of the Institute of Electronics, Information and Communication Engineers of Japan, May 1993, vol. J76-D-II, 949-958